# EUROPÄISCHE PATENTSCHRIFT

(11) **EP 0 681 169 B1**
(45) Veröffentlichungstag und Bekanntmachung des Hinweises auf die Patenterteilung: **25.08.1999**
(21) Anmeldenummer: 95105835.3
(22) Anmeldetag: 19.04.1995
(51) Int. Cl.: G01M 1/32

(54) **Vorrichtung zum Befestigen eines eine Klebeschicht aufweisenden Ausgleichsgewichts an einer Unwuchtausgleichsstelle eines Scheibenrades eines Kraftfahrzeugrades**
Arrangement for fixing a balancing weight having a glued layer to the imbalance compensating location of a vehicle wheel disc
Dispositif de fixation d'un poids muni d'une couche collante au point de compensation de balourd d'un disque de roue de véhicule

(30) Priorität: 05.05.1994 DE 4415930
(43) Veröffentlichungstag der Anmeldung: 08.11.1995
(73) Patentinhaber: HOFMANN WERKSTATT-TECHNIK GMBH, D-64319 Pfungstadt (DE)
(72) Erfinder: Drechsler, Josef, D-64319 Pfungstadt (DE)
(74) Vertreter: Nöth, Heinz, Dipl.-Phys.

(56) Entgegenhaltungen:
- EP-A- 0 519 162
- DE-B- 1 084 494

## Beschreibung

Die Erfindung betrifft eine Vorrichtung zum Befestigen eines eine Klebeschicht aufweisenden Ausgleichsgewichts an einer Unwuchtausgleichsstelle eines Scheibenrades eines Kraftfahrzeugrades mit einer Halteeinrichtung, die wenigstens zwei Halteteile zum Festhalten des Ausgleichsgewichtes mit Federvorspannung aufweist, und einer Fuhrungseinrichtung, mit welcher die Halteeinrichtung zum Andrücken des Ausgleichsgewichts an die Ausgleichsstelle führbar ist.

Eine derartige Vorrichtung ist aus der DE 42 29 865 A1 bekannt. Mit der bekannten Vorrichtung ist es möglich, selbstklebende Ausgleichsgewichte auch an verdeckten Stellen des Scheibenrades, beispielsweise an der Innenseite eines Scheibenrades, sicher zu befestigen.

Aufgabe der Erfindung ist es, eine Vorrichtung der eingangs genannten Art zu schaffen, bei der ein positionssicheres Lösen des Ausgleichsgewichts aus der Halteeinrichtung beim Befestigen an der Ausgleichsstelle gewährleistet ist.

Diese Aufgabe wird erfindungsgemäß dadurch gelöst, daß mittels der Führungseinrichtung eine Kante an der mit der Klebeschicht versehenen Seite des Ausgleichsgewichts an die Ausgleichsstelle anlegbar ist und daß durch einen mittels der Halteeinrichtung oder eines in der Halteeinrichtung gelagerten Druckübertragungsmittels zur Ausgleichsstelle hin gerichteten und auf das Ausgleichsgewicht ausgeübten Druck das Ausgleichsgewicht aus der Halteeinrichtung freigebbar und um seine an der Ausgleichsstelle anliegende Kante für das Andrücken der Klebeschicht schwenkbar ist.

Der für das Lösen des Ausgleichsgewichts aus der Halteeinrichtung und zum Andrücken mit der Klebeschicht auf die Ausgleichsstelle erforderliche Druck kann von Hand oder automatisch aufgebracht und auf das Ausgleichsgewicht übertragen werden, wenn das Ausgleichsgewicht an der Ausgleichsstelle anliegt.

Dadurch, daß ein Kippen des Ausgleichsgewichts um die zunächst an die Ausgleichsstelle angelegte Kante an der Seite des Ausgleichsgewichts, an welcher die Klebeschicht sich befindet, durchgeführt wird und bei diesem Kippen sich das Ausgleichsgewicht aus der Halteeinrichtung löst, wird ein einfacher Übergang des Ausgleichsgewichts aus seiner in der Halteeinrichtung festgehaltenen Position auf die Ausgleichsstelle erreicht. Durch die an der Ausgleichsstelle in Anlage bleibende Kante, um welche das Ausgleichsgewicht dabei kippt, wird die mit Hilfe der Führungseinrichtung aufgefundene genaue Positionierung des Ausgleichsgewichts bei diesem Übergang von der Halteeinrichtung in die Ausgleichsposition am Scheibenrad beibehalten.

Die Fläche der Ausgleichsstelle kann parallel oder schräg zur Radachse verlaufen.

In bevorzugter Weise kann wenigstens eines der beiden Halteteile der Halteeinrichtung beweglich ausgebildet sein, wobei dieses Halteteil bei auf das Ausgleichsgewicht ausgeübten Druck in eine das Ausgleichsgewicht freigebende Position verschwenkt wird.

Der Druck kann mit Hilfe des bevorzugt als verschiebbarer Druckbolzen ausgebildeten Druckmittels auf die der Klebeschicht abgekehrte Fläche des Ausgleichsgewichts ausgeübt werden.

Das Führungsmittel ist bevorzugt als teleskopierbarer Stab ausgebildet, der beweglich mit dem Aufbau einer Auswuchtmaschine verbunden ist. Ein derartiges Führungsmittel ist aus der DE 42 29 865 A1 in Verbindung mit der DE 41 22 844 A1 bekannt. Die Halteeinrichtung ist bevorzugt am freien Ende dieses als Stab ausgebildeten Führungsmittels befestigt. Durch dieses Führungsmittel kann die Halteeinrichtung und das darin befestigte Ausgleichsgewicht definiert an die gewünschte bzw. während eines Meßvorgangs ermittelte Ausgleichsstelle am Scheibenrad herangeführt werden, wie das im einzelnen aus der DE 42 29 865 A1 beschrieben ist.

Anhand der Figuren wird an Ausführungsbeispielen die Erfindung noch näher erläutert. Es zeigt:
- Fig. 1:: ein erstes Ausführungsbeispiel; und
- Fig. 2:: ein zweites Ausführungsbeispiel.

Die Figuren zeigen schnittbildliche Darstellungen der Ausführungsbeispiele. Diese zeigen einen Teil eines Schreibenrades 1. Eine Halteeinrichtung 9 ist am freien Ende einer als teleskopierbarer Stab (DE 41 22 844 A1 und DE 42 29 865 A1) ausgebildeten Führungseinrichtung 6 befestigt. Mit dieser Anordnung kann ein Ausgleichsgewicht 5 an eine verdeckte Ausgleichsstelle 10 in einer Ausgleichsebene 19 des Scheibenrades 1 herangeführt werden, wie es in der Figur verdeutlicht ist. Das Ausgleichsgewicht 5 wird mit durchgezogenen Linien in der Halteeinrichtung 9 gehalten. Die Halteeinrichtung 9 besitzt Halteteile 2 und 4. Zwischen diesen beiden Halteteilen 2 und 4 wird das Ausgleichsgewicht 5 mit Federvorspannung gehalten. Die Federvorspannung wird von einer auf das als Haltepratze ausgebildete Halteteil 2 wirkenden Feder 11 geliefert. Das Halteteil 2 ist verschiebbar (Doppelpfeil 12) an der Halteeinrichtung 9 gelagert. Die Richtung des Doppelpfeiles 12 bzw. die Verschiebbarkeit des Halteteiles 2 ist parallel zur Teleskopierrichtung der teleskopierbaren Führungseinrichtung 6.

Das andere Halteteil 4, gegen welches das Ausgleichsgewicht 5 in der Halteeinrichtung durch die Kraft der Feder 11 mittels des Halteteiles 2 angedrückt wird, kann als Haltefeder oder als fester Anschlag ausgebildet sein.

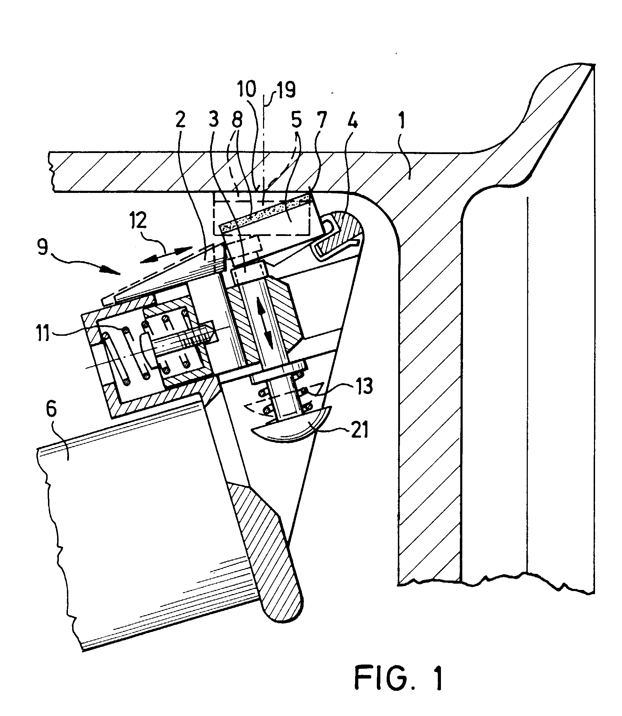

An der Halteeinrichtung 9 ist ferner als Druckübertragungsmittel 3 ein senkrecht zur Verschieberichtung des Halteteiles 2 verschiebbarer Bolzen mit einem Druckknopf 21 vorgesehen. Dieser Bolzen kann, wie die Figur 1 zeigt, von Hand gegen die Kraft einer Feder 13 gegen eine Fläche des in der Halteeinrichtung gehaltenen Ausgleichsgewichts 5 gedrückt werden. Diese Fläche liegt entgegengesetzt zu einer Klebefläche 8.

Um das Ausgleichsgewicht 5 auf die Ausgleichsstelle 10 am Scheibenrad 1 zu befestigen, wird mit Hilfe der Führungseinrichtung 6 die Halteeinrichtung 9 und das darin befestigte Ausgleichsgewicht 5 an die Ausgleichsstelle 10 herangeführt.

Das Ausgleichsgewicht 5 wird mit einer Kante 7, die an der Seite liegt, an welcher sich die Klebeschicht 8 befindet, angesetzt. Über das als Bolzen ausgebildete Druckübertragungsmittel 3 wird von Hand gegen die Kraft der Feder 13 auf das Ausgleichsgewicht 5 ein Druck ausgeübt, so daß es um die Kante 7 schwenkt und mit der Klebefläche 8 auf der Fläche der Ausgleichsstelle 10 aufliegt. Der Bolzen wird dabei in die strichlierte Stellung verschoben, und das Ausgleichsgewicht 5 kommt in die in der Figur dargestellte strichlierte Position.

Dabei wird senkrecht zur Kante 7 das Halteteil 2 in eine Freigabeposition verschoben, welche ebenfalls strichliert dargestellt ist.

Es ist auch möglich, durch Druckausübung auf die Halteeinrichtung 9, ohne daß ein zusätzliches Druckübertragungsmittel in Form des Bolzens vorgesehen ist, das Ausgleichsgewicht 5 aus seiner gehaltenen Position um die Kante 7 zu kippen, so daß es mit seiner gesamten Klebefläche 8, wie strichliert dargestellt ist, mit der Fläche der Ausgleichsposition 10 zur Auflage kommt. Durch das Druckübertragungsmittel, welches auf die zur Klebefläche 8 entgegengesetzt liegende Seite des Ausgleichsgewichtes 5 wirkt, wird eine verbesserte Positionierung des Ausgleichsgewichtes aus der in der Halteeinrichtung 9 gehaltenen Position in die an der Ausgleichsstelle 10 befestigte Position erreicht. Wenn das Halteteil 4 als Haltefeder ausgebildet ist, wird die Kippbewegung des Ausgleichsgewichtes 5 um seine Kante 7 noch erleichtert.

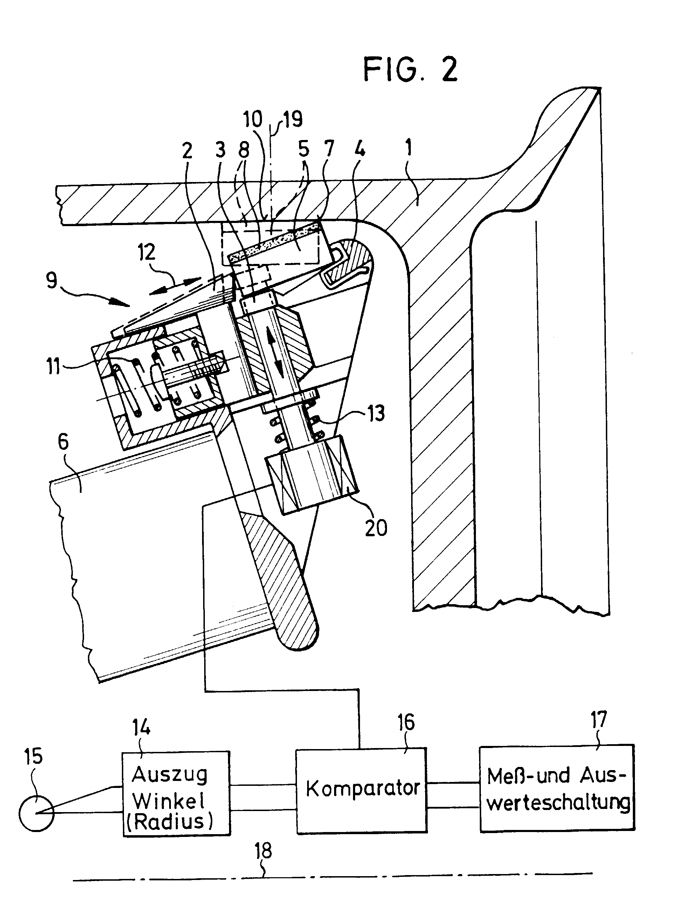

Bei dem in der Figur 2 dargestellten Ausführungsbeispiel wird der Druck auf das Ausgleichsgewicht 5 durch eine automatische Betätigungseinrichtung hergestellt. Dieser Druck wird dann erzeugt, wenn das Gewicht an die Ausgleichsstelle 10, beispielsweise mit seiner Kante 7, angelegt ist, wie es in der Figur dargestellt ist. Die automatische Betätigungseinrichtung umfaßt beim dargestellten Ausführungsbeispiel einen Hubmagneten 20. Beim Einschalten des Hubmagneten 20 wird entgegen der Kraft der Feder 13 das als verschiebbarer Bolzen ausgebildete Druckübertragungsmittel 3 nach oben geschoben, so daß das Ausgleichsgewicht 5 mit seiner gesamten Klebefläche auf die Ausgleichsstelle 10 des Scheibenrades 1 gedrückt wird.

Der Hubmagnet 20 kann beispielsweise durch einen nicht näher dargestellten Fußschalter dann eingeschaltet werden, wenn das Ausgleichsgewicht an die Ausgleichsstelle 10 in der Ausgleichsebene 19 herangeführt ist und, wie es in der DE 42 29 865 Al beschrieben ist, ein entsprechendes Signal anzeigt, daß das Ausgleichsgewicht 5 sich in der Ausgleichsebene 19 und an der Ausgleichsstelle 10 befindet.

Es ist jedoch auch möglich, automatisch den Hubmagneten 20 dann einzuschalten, wenn die teleskopierbare Führungseinrichtung 6 und das daran befestigte Ausgleichsgewicht 5 die in der Figur 2 dargestellte Position erreicht haben. Hierzu kann ein Meßwandler 15 vorgesehen sein, welcher in Abhängigkeit von dem Winkel, den die teleskopierbare Führungseinrichtung 6 gegenüber einer Achse 18 des Scheibenrades 1 einnimmt, und der Auszugslänge der teleskopierbaren Führungseinrichtung 6 elektrische Signale erzeugt. Mittels eines angeschlossenen Signalgebers 14 werden entsprechend der Winkelposition und der Auszugslänge der teleskopierbaren Führungseinrichtung 6 ein Winkel- und ein Auszugssignal an einen Komparator 16 weitergeleitet. Wenn das Winkel- und Auszugssignal der Ausgleichsebene 19 und dem Radius der Meßstelle 10 um die Achse 18 des Scheibenrades 1, welche in einer Meß- und Auswerteschaltung 17 gespeichert sind, entsprechen, wird der Hubmagnet 20 automatisch eingeschaltet. Hierbei wird vom Komparator 16 ein Einschaltsignal für den Hubmagneten 20 veranlaßt.

Anstelle des Hubmagneten 20, der direkt auf das Druckübertragungsmittel 3 wirkt, kann auch ein kapazitiv oder induktiv betätigter Schieber vorgesehen sein, welcher quer zur Bewegungsrichtung des Druckübertragungsmittels 3, d.h. in Längsausdehnung der Führungseinrichtung 6, bewegbar ist und über eine schräge Fläche auf den in Figur 1 dargestellten Druckknopf 21 am Druckübertragungsmittel 3 einwirkt.

## Patentansprüche

1. Vorrichtung zum Befestigen eines eine Klebeschicht (8) aufweisenden Ausgleichsgewichts (5) an einer Unwuchtausgleichsstelle eines Scheibenrades (1) eines Kraftfahrzeugrades mit einer Halteeinrichtung (9), die wenigstens zwei Halteteile (2, 4) zum Festhalten des Ausgleichsgewichtes (5) mit Federspannung aufweist, und einer Führungseinrichtung (6), mit welcher die Halteeinrichtung (9) zum Andrücken des Ausgleichsgewichtes (5) an die Ausgleichsstelle führbar ist,
dadurch **gekennzeichnet**,
daß mittels der Führungseinrichtung (6) eine Kante (7) an der mit der Klebeschicht (8) versehenen Seite des Ausgleichsgewichts (5) an die Ausgleichsstelle (10) anlegbar ist und daß durch einen mittels der Halteeinrichtung (9) oder eines in der Halteeinrichtung (9) gelagerten Druckübertragunsmittels (3) zur Ausgleichsstelle (10) hin gerichteten und auf das Ausgleichsgewicht (5) ausgeübten Druck das Ausgleichsgewicht (5) aus der Halteeinrichtung (9) freigebbar und um seine an der Ausgleichsstelle (10) anliegende Kante (7) für das Andrücken der Klebeschicht (8) schwenkbar ist.

2. Vorrichtung nach Anspruch 1, dadurch gekennzeichnet, daß ein von Hand ausgeübter Druck auf das Ausgleichsgewicht (5) übertragbar ist.

3. Vorrichtung nach Anspruch 1, dadurch gekennzeichnet, daß der Druck auf das Ausgleichsgewicht (5) durch eine automatische Betätigungseinrichtung (14 - 17, 20) dann ausübbar ist, wenn das Ausgleichsgewicht (5) an der Ausgleichsstelle (10) anliegt.

4. Vorrichtung nach einem der Ansprüche 1 bis 3, dadurch gekennzeichnet, daß zumindest eine der beiden Halteteile (2, 4) senkrecht zur an die Ausgleichsstelle (10) anlegbaren Kante (7) des Ausgleichsgewichtes (5) beweglich ist.

5. Vorrichtung nach einem der Ansprüche 1 bis 4, dadurch gekennzeichnet, daß das wenigstens eine bewegliche Halteteil (2) durch den auf das Ausgleichsgewicht (5) ausgeübten Druck in eine das Ausgleichsgewicht (5) freigebende Position verschiebbar ist.

6. Vorrichtung nach einem der Ansprüche 1 bis 5, dadurch gekennzeichnet, daß ein in der Halteeinrichtung (9) gelagertes Druckübertragungsmittel (3) an eine entgegengesetzt zur Klebeschicht (8) liegende Fläche des Ausgleichsgewichtes (5) andrückbar ist.

7. Vorrichtung nach einem der Ansprüche 1 bis 6, dadurch gekennzeichnet, daß das Führungsmittel (6) mit dem Aufbau einer Auswuchtmaschine beweglich verbunden ist.

8. Vorrichtung nach einem der Ansprüche 1 bis 6, dadurch gekennzeichnet, daß das Führungsmittel (6) als teleskopierbarer Stab ausgebildet ist.

9. Vorrichtung nach Anspruch 8, dadurch gekennzeichnet, daß die Halteeinrichtung (9) am freien Ende des als Stab ausgebildeten Führungsmittels (6) befestigt ist.

10. Vorrichtung nach Anspruch 6, dadurch gekennzeichnet, daß das Druckübertragungsmittel (3) als Druckbolzen ausgebildet ist, der quer zu dem in der Halteeinrichtung (9) gehaltenen Ausgleichsgewicht (5) von Hand verschiebbar ist.

11. Vorrichtung nach Anspruch 5 und 6 oder 10, dadurch gekennzeichnet, daß das bewegliche Halteteil (2) durch das Druckübertragungsmittel (3) in die das Ausgleichsgewicht (5) freigebende Position bewegbar ist.

## Claims

1. Apparatus for fixing a balancing weight (5) having an adhesive layer (8) to a balancing position on a motor vehicle disc wheel (1) comprising a holding device (9) which has at least two holding portions (2. 4) for fixing the balancing weight (5) with a spring stress, and a guide device (6) with which the holding device (9) can be guided to the balancing position for pressing the balancing weight (5) on, characterised in that an edge (7) at the side. which is provided with the adhesive layer (8), of the balancing weight (5) can be applied against the balancing position (10) by means of the guide device (6) and that, by virtue of a pressure which is applied to the balancing weight (5) and which is directed towards the balancing position (10) by means of the holding device (9) or a pressure-transmitting means (3) mounted in the holding device (9), the balancing weight (5) can be released from the holding device (9) and can be pivoted about its edge (7) which bears against the balancing position (10) for pressing the adhesive layer (8) on.

2. Apparatus according to claim 1 characterised in that a pressure which is exerted by hand can be transmitted to the balancing weight (5).

3. Apparatus according to claim 1 characterised in that the pressure can be applied to the balancing weight (5) by an automatic actuating device (14 - 17. 20) when the balancing weight (5) bears against the balancing position (10).

4. Apparatus according to one of claims 1 to 3 characterised in that at least one of the two holding portions (2, 4) is movable perpendicularly to the edge (7) of the balancing weight (5) which can be applied to the balancing position (10).

5. Apparatus according to one of claims 1 to 4 characterised in that the at least one movable holding portion (2) is displaceable into a position of releasing the balancing weight (5) by the pressure applied to the balancing weight (5).

6. Apparatus according to one of claims 1 to 5 characterised in that a pressure-transmitting means (3) which is mounted in the holding device (9) can be pressed against a surface of the balancing weight (5), which is in opposite relationship to the adhesive layer (8).

7. Apparatus according to one of claims 1 to 6 characterised in that the guide means (6) is movably connected to the structure of a balancing machine.

8. Apparatus according to one of claims 1 to 6 characterised in that the guide means (6) is in the form of a telescopic bar.

9. Apparatus according to claim 8 characterised in that the holding device (9) is fixed at the free end of the guide means (6) which is in the form of a bar.

10. Apparatus according to claim 6 characterised in that the pressure-transmitting means (3) is in the form of a pressure pin which is displaceable by hand transversely with respect to the balancing weight (5) held in the holding device (9).

11. Apparatus according to claim 5 and claim 6 or claim 10 characterised in that the movable holding portion (2) is movable by the pressure-transmitting means (3) into the position of releasing the balancing weight (5).

## Revendications

1. Dispositif de fixation d'une masselotte (5) d'équilibrage munie d'une couche (8) collante au point de compensation de balourd d'un disque (1) de roue de véhicule, comportant un dispositif (9) de maintien, qui comprend au moins deux parties (2, 4) de maintien pour maintenir bloquée la masselotte (5) d'équilibrage sous précontrainte de ressort, et un dispositif (6) de guidage, qui permet de diriger le dispositif (9) de maintien afin d'appliquer la masselotte (5) d'équilibrage au point de compensation,
**caractérisé** en ce que, au moyen du dispositif (6) de guidage, une arête (7) sur le côté de la masselotte (5) d'équilibrage qui est pourvu de la couche (8) collante peut être appliquée au point (10) de compensation, et en ce que, par une pression dirigée vers le point (10) de compensation et exercée sur la masselotte (5) d'équilibrage au moyen du dispositif (9) de maintien ou d'un moyen (3) de transmission de pression monté dans le dispositif (9) de maintien, la masselotte (5) d'équilibrage peut être libérée du dispositif (9) de maintien et basculée autour de son arête (7) appliquée au point (10) de compensation, afin de presser la couche (8) collante en application.

2. Dispositif suivant la revendication 1, **caractérisé** en ce qu'une pression exercée à la main peut être transmise sur la masselotte (5) d'équilibrage.

3. Dispositif suivant la revendication 1, **caractérisé** en ce que la pression peut être exercée sur la masselotte (5) d'équilibrage par un dispositif (14 à 17, 20) d'actionnement automatique une fois que la masselotte (5) d'équilibrage est appliquée au point (10) de compensation.

4. Dispositif suivant l'une des revendications 1 à 3, **caractérisé** en ce qu'au moins une des deux parties (2, 4) de maintien est mobile perpendiculairement à l'arête (7) de la masselotte (5) d'équilibrage qui peut être appliquée au point (10) de compensation.

5. Dispositif suivant l'une des revendications 1 à 4, **caractérisé** en ce que la ou chaque partie (2) de maintien mobile peut être mis, par la pression exercée sur la masselotte (5) d'équilibrage, dans une position libérant la masselotte (5) d'équilibrage.

6. Dispositif suivant l'une des revendications 1 à 5, **caractérisé** en ce qu'un moyen (3) de transmission de pression, monté dans le dispositif (9) de maintien, peut être appliqué sur une face de la masselotte (5) d'équilibrage, qui est opposée à la couche (8) collante.

7. Dispositif suivant l'une des revendications 1 à 6, **caractérisé** en ce que le moyen (6) de guidage est relié à déplacement à la structure d'une machine d'équilibrage.

8. Dispositif suivant l'une des revendications 1 à 6, **caractérisé** en ce que le moyen (6) de guidage est réalisé sous forme de tige télescopique.

9. Dispositif suivant la revendication 8, **caractérisé** en ce que le dispositif (9) de maintien est fixé à l'extrémité libre du moyen (6) de guidage réalisé sous forme de tige.

10. Dispositif suivant la revendication 6, **caractérisé** en ce que le moyen (3) de transmission de pression est réalisé sous forme de poussoir, qui peut être déplacé à la main transversalement à la masselotte (5) d'équilibrage maintenue dans le dispositif (9) de maintien.

11. Dispositif suivant la revendication 5 ou 6 ou 10, **caractérisé** en ce que la partie (2) de maintien mobile peut être mis par le moyen (3) de transmission de pression dans la position libérant la masselotte (5) d'équilibrage.
